# EUROPÄISCHE PATENTSCHRIFT

(11) **EP 1 334 619 B1**
(45) Veröffentlichungstag und Bekanntmachung des Hinweises auf die Patenterteilung: **19.01.2005**
(21) Anmeldenummer: 01994033.7
(22) Anmeldetag: 09.11.2001
(51) Int. Cl.: H04N 7/18

(54) **BEDARFSGESTEUERTES LOGISTIKSYSTEM UND EIN VERFAHREN ZUM ÜBERWACHEN EINES BEDARFSGESTEUERTEN LOGISTIKSYSTEMS**
DEMAND-CONTROLLED LOGISTICAL SYSTEM AND A METHOD FOR MONITORING A DEMAND-CONTROLLED LOGISTICAL SYSTEM
SYSTEME LOGISTIQUE COMMANDE EN FONCTION DES BESOINS ET PROCEDE DE SURVEILLANCE D'UN SYSTEME LOGISTIQUE COMMANDE EN FONCTION DES BESOINS

(30) Priorität: 13.11.2000 DE 10056217
(43) Veröffentlichungstag der Anmeldung: 13.08.2003
(73) Patentinhaber: SIEMENS AKTIENGESELLSCHAFT, 80333 München (DE)
(72) Erfinder: HEILMANN, Ludwig, 91361 Pinzberg (DE); HELLDÖRFER, Hans-Ludwig, 91056 Möhrendorf (DE); HOLZSCHUH, Michael, 96114 Hirschaid (DE)
(86) Internationale Anmeldenummer: PCT/DE2001/004216
(87) Internationale Veröffentlichungsnummer: WO 2002/039746

(56) Entgegenhaltungen:
- EP-A- 1 030 521
- WO-A-99/30260
- DE-A- 19 918 096
- PATENT ABSTRACTS OF JAPAN vol. 1996, no. 11, 29. November 1996 (1996-11-29) & JP 08 187635 A (NISSAN MOTOR CO LTD), 23. Juli 1996 (1996-07-23)
- PATENT ABSTRACTS OF JAPAN vol. 1996, no. 01, 31. Januar 1996 (1996-01-31) & JP 07 244782 A (ISHIDA CO LTD), 19. September 1995 (1995-09-19)

## Beschreibung

Die Erfindung betrifft ein bedarfsgesteuertes Logistiksystem zur Nachlieferung von Zuliefereinheiten von Lieferanten an einen Abnehmer, mindestens aufweisend eine Videokamera und eine Stellfläche mit Zuliefereinheiten bei dem Abnehmer. Die Erfindung bezieht sich außerdem auf ein Verfahren zum Überwachen eines bedarfsgesteuerten Logistiksystems.

Bedarfsgesteuerte Logistiksysteme, die beispielsweise unter der Bezeichnung "Kanbanlogistik" bekannt geworden sind, basieren darauf, dass im Interesse möglichst geringer Vorratshaltung ein Lieferant immer dann eine oder mehrere Zuliefereinheiten auf eine bei einem Abnehmer befindliche Stellfläche anliefert, wenn der Bestand an Zuliefereinheiten unter einen bestimmten Mindestwert gesunken ist.

Bei den Zuliefereinheiten kann es sich beispielsweise um ganze Baugruppen, einzelne Bauteile oder Verpackungseinheiten von Bauteilen oder Bauelementen handeln. Eine Nachlieferung wird dadurch ausgelöst, dass der Abnehmer den Lieferanten in geeigneter Weise, beispielsweise durch Zusenden einer Fax-Nachricht, zur Nachlieferung auffordert. Dabei ist für den Lieferanten nachteilig, dass er über den Bestand an Zuliefereinheiten bei einem Abnehmer nur dann eine Information erhält, wenn der Bestand unter den Mindestbestand abgesunken ist.

Aus der EP 1 030 521 A1 ist es bekannt, mittels einer Videokamera-Anordnung beispielsweise den Inhalt eines Kühlschrankes aufzunehmen und das Bild des Inhalts oder daraus abgeleitete Daten zu dem Benutzer des Kühlschrankes zu übertragen, um diesen in die Lage zu versetzen, eventuell erforderliche Einkäufe zu tätigen.

Der Erfindung liegt die Aufgabe zugrunde, ein Logistiksystem so auszugestalten, dass es für einen Lieferanten möglich ist, auch schon vor dem Erreichen des Mindestbestands eine Information über den tatsächlichen Bestand an Zulieferungseinheiten bei einem Abnehmer zu erhalten. Der Erfindung liegt außerdem die Aufgabe zugrunde, ein Verfahren zur Überwachung eines bedarfsgesteuerten Logistiksystems anzugeben.

Gemäß der Erfindung und bezogen auf das eingangs genannte Logistiksystem wird die systemorientierte Aufgabe dadurch gelöst, dass ein bedarfsgesteuertes Logistiksystem zur Nachlieferung von Zuliefereinheiten von Lieferanten an einen Abnehmer zur Verfügung gestellt wird, das mindestens aufweist: eine Videokamera, eine Stellfläche mit Zuliefereinheiten bei dem Abnehmer, die einem bestimmten Lieferanten zugeordnet ist, wobei die Videokamera auf die Stellfläche ausgerichtet ist und Bilddaten von der Stellfläche aufnimmt, eine Anzeigeneinheit beim Lieferanten, eine Datenleitung zwischen der Videokamera des Abnehmers und der Anzeigeneinheit des Lieferanten und Mittel, die die Bilddaten der Stellfläche zur Anzeigeneinheit des Lieferanten übertragen.

Im Falle der Erfindung besteht also für den Lieferanten jederzeit die Möglichkeit, sich anhand des Bildes der Stellfläche über die Anzahl der dort vorhandenen Zuliefereinheiten zu informieren.

Auch für den Abnehmer ermöglicht die Erfindung eine Vereinfachung, da Bestandsüberprüfungen und Benachrichtigungen des Lieferanten entfallen können.

Gemäß einer bevorzugten Ausführungsform der Erfindung ist die Datenleitung zumindest teilweise durch das Internet gebildet, so dass keine aufwendigen Maßnahmen zur Herstellung einer Datenleitung zwischen Lieferant und der Videokamera-Anordnung erforderlich sind.

Gemäß weiteren bevorzugten Ausführungsformen umfasst die Videokamera-Anordnung eine mit einem Computer, insbesondere einem Personalcomputer (PC), verbundene Videokamera, bei der es sich vorzugsweise um eine sogenannte Web Camera (webcam) handelt. Mit der Realisierung der Videokamera-Anordnung ist somit kein besonderer Aufwand verbunden. Außerdem liegt für den Fall, dass die Datenübertragung über das Internet erfolgen soll, eine besonders geeignete Hardwarekonfiguration vor.

In vielen Fällen wird es genügen, wenn als Bild ein Standbild übertragen wird.

Die in diesem Fall erforderliche Aktualisierung des Standbildes kann in definierten, vorzugsweise einstellbaren Zeitabständen erfolgen, wobei die Zeitabstände dem Einzelfall entsprechend zu wählen sind und in der Größenordnung von Stunden bis Tagen liegen können. Gemäß einer weiteren Variante der Erfindung kann die Videokamera-Anordnung jedoch auch Betätigungsmittel aufweisen, bei deren Betätigung eine Aktualisierung des Standbildes erfolgt. Es ist dann möglich, jedes Mal bei Entnahme einer Zuliefereinheit die Betätigungsmittel zu aktivieren und so dafür zu sorgen, dass das Standbild jeweils die aktuelle Situation wiedergibt.

Dabei kann als Betätigungsmittel im einfachsten Fall ein Eingabemittel, beispielsweise die Tastatur oder die Mouse eines zu der Videokamera-Anordnung gehörigen Computers, vorgesehen sein.

Gemäß einer besonders bevorzugten Ausführungsform der Erfindung können die Betätigungsmittel jedoch auch durch eine Leseeinrichtung für an den Zulieferungseinheiten vorgesehene Datenträger gebildet sein, beispielsweise durch einen Barcodeleser und Barcodelabels. In diesem Falle wird bei Entnahme einer Zuliefereinheit von der Stellfläche der Datenträger gelesen und bei Abschluss des Lesevorgangs das Standbild aktualisiert.

Um in Fällen, in denen seitens des Lieferanten Zweifel an der Aktualität des Standbildes bestehen, diese Zweifel ausräumen zu können, ist gemäß einer Variante der Erfindung vorgesehen, dass die Anzeigeeinheit Betätigungsmittel aufweist, bei deren Betätigung eine Aktualisierung des Standbildes erfolgt. Dies lässt sich besonders einfach realisieren, wenn die Anzeigeeinheit einen vorzugsweise als Personal Computer (PC) ausgebildeten Computer mit Anzeigeeinrichtung umfasst.

Der ein Verfahren betreffende Teil der Aufgabe wird erfindungsgemäß gelöst durch ein Verfahren zur Überwachung einer einem in ein bedarfsgesteuertes Logistiksystem einbezogenen Lieferanten zugeordneten Stellfläche, aufweisend die Verfahrensschritte, dass mittels einer Videokamera-Anordnung die Stellfläche aufgenommen wird und dass dem Bild der Stellfläche entsprechende Ausgangsdaten der Videokamera-Anordnung über eine Datenleitung zu dem Lieferanten übertragen und dort auf einer Anzeigeeinheit dargestellt werden. Dabei wird gemäß Varianten der Erfindung jeweils nach Entnahme einer Zuliefereinheit das Bild der Stellfläche aktualisiert und zu dem Lieferanten übertragen, vorzugsweise auf Betätigung eines entsprechenden Betätigungsmittels der Videokamera-Anordnung hin.

Ein Ausführungsbeispiel der Erfindung ist in der beigefügten, grob schematischen, teilweise blockschaltbildartigen Figur dargestellt.

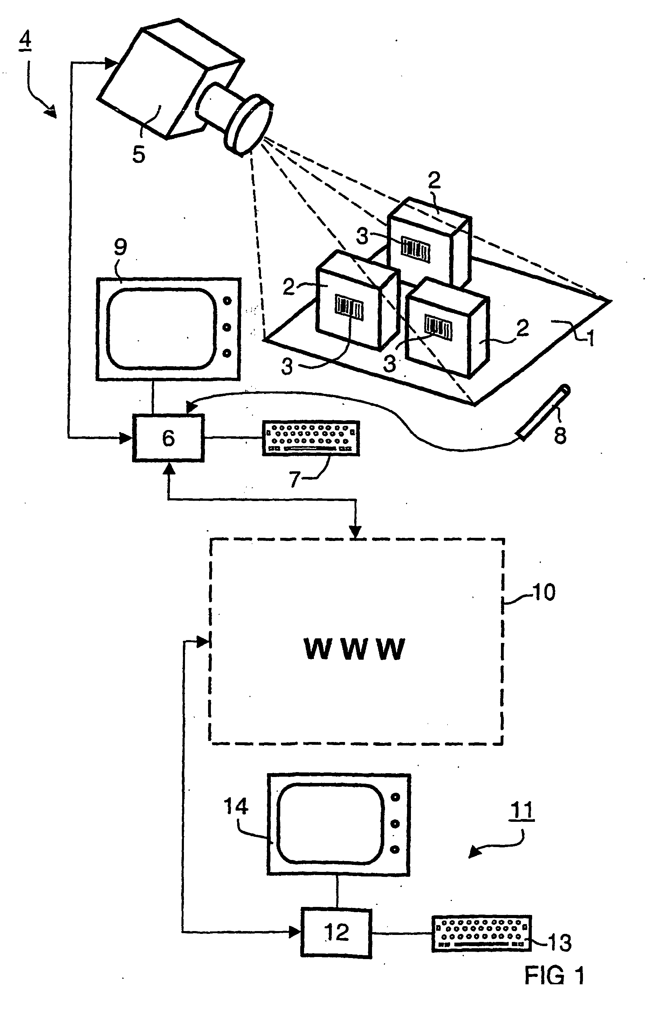

Die Figur veranschaulicht ein bedarfsgesteuertes Logistiksystem, bei dem einem Lieferanten eine in der Figur stark verkleinert dargestellte, bei einem Abnehmer befindliche Stellfläche 1 zugeordnet ist, auf der der Lieferant von ihm angelieferte Zuliefereinheiten 2 abstellt.

Jeweils bei Bedarf wird eine Zuliefereinheit von der Stellfläche 1 entnommen und einer Fertigungslinie zugeführt, in der die jeweilige Zuliefereinheit 2 bzw. deren Inhalt benötigt wird.

Die Zuliefereinheiten 2 sind jeweils mit einem Barcode-Label 3 als Datenträger versehen, das die jeweilige Zuliefereinheit 2 identifizierende Daten enthält.

Die Stellfläche 1 wird mittels einer insgesamt mit 4 bezeichneten Videokamera-Anordnung überwacht. Die Videokamera-Einrichtung umfasst eine Videokamera 5 und einen Computer 6, an den eine Tastatur 7, ein Barcode-Lesestift 8 als Leseeinrichtung für die Barcode-Labels 3 und eine Anzeigeeinrichtung, beispielsweise ein Monitor 9, angeschlossen sind. Bei dem Computer 6 handelt es sich um einen herkömmlichen Personal Computer (PC) und bei der Videokamera 5 um eine Videokamera der im Fachhandel als "webcam" erhältlichen Art.

Die Videokamera-Anordnung 5 ist über eine Datenleitung, die zumindest teilweise durch das mit 10 bezeichnete Internet (WWW) gebildet ist, mit einer bei dem Lieferanten befindlichen, insgesamt mit 11 bezeichneten Anzeigeeinheit verbunden.

Bei der Anzeigeeinheit 11 handelt es sich um einen Computer 12, insbesondere einen Personal Computer (PC) mit angeschlossener Tastatur 13 und Anzeigeeinrichtung, z.B. einem Monitor 14.

Dank der Verbindung der Videokamera-Anordnung 4 mit der Anzeigeeinrichtung 11 über das Internet 10 besteht also die Möglichkeit, ein mittels der Videokamera 5 aufgenommenes Bild der Stellfläche 1 zu dem Lieferanten zu übertragen und auf dem Monitor 14 darzustellen, so dass der Lieferant in der Lage ist, zu erkennen, wie viele Zuliefereinheiten 2 sich momentan noch auf der Stellfläche 1 befinden, und zu entscheiden, ob es angebracht ist, neue Zuliefereinheiten 2 zu der Stellfläche 1 zu liefern.

Obwohl dies grundsätzlich möglich ist, wird in der bevorzugten Betriebsart des beschriebenen Logistiksystems kein Lifebild der Stellfläche 1, sondern ein Standbild übertragen. Dieses Standbild wird in definierten Zeitabständen aktualisiert, wobei die Zeitabstände durch eine entsprechende Eingabe mittels der Tastatur 7 einstellbar sind.

Um unabhängig von der jeweils eingestellten Zeitdauer eine Aktualisierung des Standbildes zu ermöglichen, kann durch eine entsprechende Betätigung der dann als Betätigungsmittel fungierenden Tastatur 7 der Videokamera-Anordnung 4 das Standbild zu aktualisiert werden.

Darüber hinaus ist vorgesehen, dass jedes Mal dann, wenn eine Zuliefereinheit 2 von der Stellfläche 1 entnommen wird, um sie der jeweiligen Fertigungslinie zuzuführen, mittels des Barcodelesestiftes 8 das Barcode-Label 3 der entnommenen Zuliefereinheit 2 gelesen wird. Ausgelöst durch diesen Lesevorgang aktualisiert einerseits die Videokamera-Anordnung 4 das von ihr gelieferte Standbild.

Die Übertragung des jeweils aktualisierten Standbildes und gegebenenfalls der von einem Barcode-Label 3 die gelesenen Daten zu dem Lieferanten erfolgt beispielsweise als Dateianlage (attachment) einer auf die Aktualisierung des Standbildes hinweisenden e-mail.

Alternativ besteht auch die Möglichkeit den Lieferanten, durch Anwendung der sogenannten push-Technologie auf Aktualisierungen des Standbildes und gegebenenfalls das Vorhandensein neuer von einem Barcode-Label 3 die gelesenen Daten hinzuweisen. Das aktualisierte Standbild und eventuell zugehörige Daten werden dann, sofern der Lieferant einer entsprechenden Abfrage zustimmt automatisch zu dem Lieferanten übertragen und auf der Anzeigeeinheit 11 dargestellt.

Maßnahmen wie e-mails und Anwendung der push-Technologie können natürlich entfallen, wenn über das Internet 10 eine kontinuierliche Verbindung der Videokamera-Anordnung 4 mit der Anzeigeeinheit 11 aufrecht erhalten wird.

Im Falle der Erfindung ist dem Lieferanten also die Möglichkeit gegeben, sich ständig über die Anzahl der auf der Stellfläche 1 vorhandenen Zuliefereinheiten 2 auf dem Laufenden zu halten.

Im Falle des beschriebenen Ausführungsbeispiels hat der Lieferant außerdem selbst die Möglichkeit, durch eine entsprechende Betätigung der dann als Betätigungsmittel fungierenden Tastatur 13 der Anzeigeeinheit 11 das Standbild zu aktualisieren.

In diesem Falle wird eine entsprechende Nachricht zu der Videokamera-Anordnung 4 gesendet, die dann, wenn diese Funktion freigegeben ist, eine kleine Anwendung (aplet) auf dem Computer 6 der Videokamera-Anordnung 4 startet, die die Aktualisierung des Standbildes bewirkt.

Im Falle des beschriebenen Ausführungsbeispiels erfolgt die Datenübertragung zwischen Videokamera-Anordnung 4 und Anzeigeeinheit 11 zumindest teilweise über das Internet. Dies muss im Rahmen der Erfindung nicht notwendigerweise so sein. Vielmehr kann die Datenübertragung auch auf andere Weise, z.B. über WAN (Wide Area Network) oder LAN (Local Area Network) erfolgen. Auch die Ausbildung von Videokamera-Anordnung 4 und/oder Anzeigeeinheit 11 kann von dem beschriebenen Ausführungsbeispiel abweichen.

## Patentansprüche

1. Bedarfsgesteuertes Logistiksystem zur Nachlieferung von Zuliefereinheiten (2) von Lieferanten an einen Abnehmer, mindestens aufweisend:
- eine Videokamera (5),
- eine Stellfläche (1) mit Zuliefereinheiten (2) bei dem Abnehmer, die einem bestimmten Lieferanten zugeordnet ist, wobei die Videokamera (5) auf die Stellfläche (1) ausgerichtet ist und Bilddaten von der Stellfläche (1) aufnimmt,
- eine Anzeigeneinheit (11) beim Lieferanten,
- eine Datenleitung zwischen der Videokamera (5) des Abnehmers und der Anzeigeneinheit (11) des Lieferanten und
- Mittel, die die Bilddaten der Stellfläche (1) zur Anzeigeneinheit (11) des Lieferanten übertragen.

2. Logistiksystem nach Anspruch 1, bei dem die Datenleitung (10) zumindest teilweise durch das Internet (WWW) gebildet ist.

3. Logistiksystem nach Anspruch 1 oder 2, bei dem die Videokamera mit einem Computer (6) zu einer Videokameraanordnung (4) verbundenen ist.

4. Logistiksystem nach Anspruch 3, bei dem als Computer (6) ein Personal Computer (PC) vorgesehen ist.

5. Logistiksystem nach Anspruch 3 oder 4, bei dem als Videokamera (5) eine Web Camera (Webcam) vorgesehen ist.

6. Logistiksystem nach einem der Ansprüche 1 bis 5, bei dem als Bild ein Standbild übertragen wird.

7. Logistiksystem nach Anspruch 6, bei dem in definierten, vorzugsweise einstellbaren Zeitabständen eine Aktualisierung des Standbildes erfolgt aktualisiert.

8. Logistiksystem nach Anspruch 6 oder 7, bei dem die Videokamera-Anordnung (4) Betätigungsmittel (7) aufweist, bei deren Betätigung eine Aktualisierung des Standbildes erfolgt.

9. Logistiksystem nach einem der Ansprüche 6 bis 8, bei dem die Anzeigeeinheit (11) Betätigungsmittel (13) aufweist, bei deren Betätigung eine Aktualisierung des Standbildes erfolgt.

10. Logistiksystem nach Anspruch 9, bei dem die Betätigungsmittel jeweils einen an den einzelnen Zuliefereinheiten (2) angebrachten Datenträger (3) für die Zuliefereinheit (2) identifizierende Daten und eine an die Anzeigeeinrichtung (11) angeschlossene Leseeinrichtung für die Datenträger umfassen.

11. Logistiksystem nach einem der Ansprüche 1 bis 10, bei dem die Anzeigeeinheit (11) einen Computer (12) mit Anzeigeeinrichtung (14) umfasst.

12. Logistiksystem nach Anspruch 11, bei dem als Computer (12) ein Personal Computer (PC) vorgesehen ist.

13. Verfahren zur Überwachung einer einem in ein bedarfsgesteuertes Logistiksystem einbezogenen Lieferanten zugeordneten Stellfläche (1) für Zuliefereinheiten (2), aufweisend die Verfahrenschritte, dass mittels einer Videokamera-Anordnung (4) die Stellfläche (1) aufgenommen wird und dass dem Bild der Stellfläche (1) entsprechende Ausgangsdaten der Videokamera-Anordnung (4) über eine Datenleitung (10) zu dem Lieferanten übertragen und dort auf einer Anzeigeeinheit (11) dargestellt werden.

14. Verfahren nach Anspruch 13, bei dem zumindest jeweils nach Entnahme einer Zuliefereinheit (2) das Bild der Stellfläche (1) aktualisiert und zu dem Lieferanten übertragen wird.

15. Verfahren nach Anspruch 14, bei dem zur Aktualisierung des Bildes ein entsprechendes Betätigungsmittel (7) der Videokamera-Anordnung (4) betätigt wird.

## Claims

1. Demand-driven logistics system for additional delivery of delivery units (2) by suppliers to a consumer, comprising at least
- a video camera (5)
- a storage area (1) with delivery units (2) at the consumer premises which is allocated to a specific supplier, with the video camera (5) being focused on the storage area (1) and recording image data of the storage area (1),
- a display unit (11) at the supplier location,
- a data link between the video camera (5) of the consumer and the display unit (11) of the supplier, and
- means which transmit the image data of the storage area (1) to the display unit (11) of the supplier.

2. Logistics system according to claim 1, wherein the data link (10) is at least partly formed by the internet (WWW).

3. Logistics system according to claim 1 or 2, wherein the video camera is connected to a computer (6) to form a video camera arrangement (4).

4. Logistics system according to claim 3, wherein a personal computer (PC) is provided as the computer (6).

5. Logistics system according to claim 3 or 4, wherein a web camera (webcam) is provided as the video camera (5).

6. Logistics system according to one of the claims 1 to 5, wherein a still image is transmitted as the image.

7. Logistics system according to claim 6, wherein the still image is updated at defined, preferably selectable time intervals.

8. Logistics system according to claim 6 or 7, wherein the video camera arrangement (4) comprises actuation means (7) which, when activated, cause the still image to be updated.

9. Logistics system according to one of the claims 6 to 8, wherein the display unit (11) comprises actuation means (13) which, when activated, cause the still image to be updated.

10. Logistics system according to claim 9, wherein the actuation means comprise, respectively, a data medium (3) for data identifying the delivery unit (2), which data medium is attached to the individual delivery units (2), and a reading device for the data media which is connected to the display device (11).

11. Logistics system according to one of the claims 1 to 10, wherein the display unit (11) comprises a computer (12) with display device (14).

12. Logistics system according to claim 11, wherein a personal computer (PC) is provided as the computer (12).

13. Method for monitoring a storage area (1) for delivery units (2) allocated to a supplier integrated in a demand-driven logistics system, said method comprising the method steps that the storage area (1) is recorded by means of a video camera arrangement (4) and that output data of the video camera arrangement (4) corresponding to the image of the storage area (1) is transmitted to the supplier via a data link (10) and displayed on a display unit (11) at the supplier location.

14. Method according to claim 13, wherein the image of the storage area (1) is updated and transmitted to the supplier at least each time a delivery unit (2) is removed.

15. Method according to claim 14, wherein a corresponding actuation means (7) of the video camera arrangement (4) is activated in order to update the image.

## Revendications

1. Système logistique commandé en fonction des besoins, pour que des fournisseurs réapprovisionnement un client en unités (2) à fournir, comportant au moins :
- une caméra (5) vidéo,
- une surface (1) de pose chez le client, qui est associée à un fournisseur donné et sur laquelle se trouvent des unités (2) fournies, la, caméra (5) vidéo étant dirigée sur la surface (1) de pose et enregistrant des données d'image de la surface (1 ) de pose,
- une unité (11) d'affichage chez le fournisseur,
- une ligne de transmission de données entre la caméra (5) vidéo du client et l'unité (11) d'affichage du fournisseur, et
- des moyens qui transmettent les données d'image de la surface (1) de pose à l'unité (11) d'affichage du fournisseur.

2. Système logistique suivant la revendication 1, dans lequel la ligne (10) de transmission de données est formée au moins partiellement par l'Internet (WWW).

3. Système logistique suivant la revendication 1 ou 2, dans lequel la caméra vidéo est reliée à un ordinateur (6) pour former un ensemble (4) vidéo.

4. Système logistique suivant la revendication 3, dans lequel un ordinateur personnel (PC) est prévu comme ordinateur (6).

5. Système logistique suivant la revendication 3 ou 4, dans lequel une caméra Web (webcam) est prévue comme caméra (5) vidéo.

6. Système logistique suivant l'une des revendications 1 à 5, dans lequel une image fixe est transmise comme image.

7. Système logistique suivant la revendication 6, dans lequel une actualisation de l'image fixe s'effectue de manière actualisée à des intervalles de temps définis, de préférence réglables.

8. Système logistique suivant la revendication 6 ou 7, dans lequel l'ensemble (4) vidéo comporte des moyens (7) d'actionnement lors de l'actionnement desquels s'effectue une actualisation de l'image fixe.

9. Système logistique suivant l'une des revendications 6 à 8, dans lequel l'unité (11) d'affichage comporte des moyens (13) d'actionnement lors de l'actionnement desquels s'effectue une actualisation de l'image fixe.

10. Système logistique suivant la revendication 9, dans lequel les moyens d'actionnement comprennent un support (3) respectif de données, installé sur les unités (2) fournies individuelles, pour des données identifiant l'unité (2) fournie, et un équipement de lecture pour les supports de données, raccordé à l'unité (11) d'affichage.

11. Système logistique suivant l'une des revendications 1 à 10, dans lequel l'unité (11) d'affichage comprend un ordinateur (12) pourvu d'un équipement (14) d'affichage.

12. Système logistique suivant la revendication 11, dans lequel un ordinateur personnel (PC) est prévu comme ordinateur (12).

13. Procédé de surveillance d'une surface (1) de pose pour des unités (2) fournies qui est associée à un fournisseur intégré dans un système logistique commandé en fonction des besoins, comprenant les étapes de procédé consistant en ce que la surface (1 ) de pose est enregistrée au moyen d'un ensemble (4) vidéo, et en ce que des données de sortie de l'ensemble (4) vidéo, qui correspondent à l'image de la surface (1) de pose, sont transmises par l'intermédiaire d'une ligne (10) de transmission de données chez le fournisseur et y sont représentées sur une unité (11) d'affichage.

14. Procédé suivant la revendication 13, suivant lequel, au moins après chaque prélèvement d'une unité (2) fournie, l'image de la surface (1) de pose est actualisée et transmise au fournisseur.

15. Procédé suivant la revendication 14, suivant lequel, pour l'actualisation de l'image, on actionne un moyen (7) d'actionnement correspondant de l'ensemble (4) vidéo.
